# EUROPEAN PATENT APPLICATION

(11) **EP 2 372 240 A1**
(43) Date of publication of application: **05.10.2011**
(21) Application number: 09831703.5
(22) Date of filing: 09.12.2009
(51) Int. Cl.: F23C 3/00, F23D 14/22

(54) **COMBUSTOR**

(30) Priority: 10.12.2008 JP 2008314691; 15.12.2008 JP 2008318537
(71) Applicant: IHI Corporation, Tokyo 135-8710 (JP)
(72) Inventor: KATO, Soichiro, Tokyo 135-8710 (JP); MIZUTANI, Taku, Tokyo 135-8710 (JP); TAKAHASHI, Katsuyoshi, Tokyo 135-8710 (JP)
(74) Representative: Waldren, Robin Michael
(86) International application number: PCT/JP2009/006725
(87) International publication number: WO 2010/067596

(57) **Abstract**

A combustor comprises a fuel flow path (10) which is a flow path for fuel (G1) and which is capable of emitting the fuel to its own exterior; an air flow path (20) which is a flow path for air (G2) and which is capable of emitting the air to its own exterior; and an exhaust gas flow path (30) which has a combustion region (R) wherein an air-fuel mixture that mixes the fuel and the air is burned and which constitutes an exhaust flow path for burned gas that is produced by combustion; wherein the fuel within the fuel flow path and the air within the air flow path are heated by the heat of the burned gas, and the air-fuel mixture is constituted by mixing the fuel emitted from the fuel flow path and the air emitted from the air flow path in the exhaust gas flow path.

## Description

### TECHNICAL FIELD

The present invention relates to a combustor which carries out combustion of an air-fuel mixture that mixes fuel emitted from a first pipe and oxidant emitted from a second pipe, and which heats combustion gas by transferring the heat of burned gas that is produced by this combustion to the aforementioned oxidant via a third pipe. Priority is claimed on Japanese Patent Application No. 2008-314691, filed December 10, 2008, and Japanese Patent Application No. 2008-318537, filed December 15, 2008, the content of which is incorporated herein by reference.

### BACKGROUND ART

Previously, as a combustor enabling size reduction, a combustor has been known which bums combustion gas (an air-fuel mixture that mixes fuel and oxidant) which is emitted from a first pipe via apertures that are within a flame quenching distance in a combustion region within a second pipe.
According to this type of combustor, flame propagation to the first pipe is prevented by the apertures that are within the flame quenching distance, and it is possible to stably burn combustion gas in an extremely narrow combustion region within the second pipe by appropriately supplying combustion gas.

As this type of combustor, for purposes of more stable burning of combustion gas, further size reduction of the combustor, and enhancement of energy efficiency, a combustor has been proposed that heats combustion gas prior to burning by transferring the heat of burned gas that is produced by burning combustion gas to the combustion gas via a first pipe (see, e.g., Patent Document 1).

Patent Document 1: Japanese Unexamined Patent Application, Publication No. 2004-156862

### DISCLOSURE OF INVENTION

### PROBLEMS THAT THE INVENTION IS TO SOLVE

However, as the fuel and the oxidant are premixed as stated above, the combustion gas undergoes spontaneous ignition when heated to an auto-ignition temperature or above. Consequently, with respect to a combustor that transfers the heat of burned gas to combustion gas, in order to limit the heat that is transferred from the burned gas to the combustion gas, limitations are placed on the distance of the thermal exchange path and on the material of the thermal exchange path, and limitations or the like also arise with respect to combustion energy, reducing the degree of design freedom of the combustor.

Moreover, in order to efficiently supply the heat of burned gas to the combustion gas, it is preferable to form the pipe which constitutes the flow path of the combustion gas from material with high thermal conductivity. However, materials that have high thermal conductivity have low thermal resistance. Consequently, in the case where the aforementioned pipe is formed from material with high thermal conductivity, the region of the aforementioned pipe that is exposed to the high-temperature environment in the vicinity of the combustion region deteriorates due to oxidation embrittlement, and the life of the combustor is shortened.

On the other hand, it would also be conceivable to form the aforementioned pipe from material with high thermal resistance. However, as material with high thermal resistance has low thermal conductivity, the heat of burned gas could not be efficiently transferred to the combustion gas, and heating of the combustion gas would be insufficient.

The present invention was made in light of the foregoing problems, and with respect to a combustor that enables reduced size and that heats an air-fuel mixture by the heat of burned gas, its object is to prevent auto-ignition of the air-fuel mixture, and enhance the degree of design freedom of the combustor, as well as to render the combustion gas sufficiently heatable, and enhance durability.

### MEANS FOR SOLVING THE PROBLEMS

The present invention adopts the following configurations in order to solve the aforementioned problems.

A first invention relates to a combustor which includes: a fuel flow path which is a flow path for fuel and which is capable of emitting the aforementioned fuel to its exterior; an oxidant flow path which is a flow path for oxidant and which is capable of emitting the aforementioned oxidant to its exterior; and an exhaust gas flow path which has a combustion region wherein an air-fuel mixture that mixes the aforementioned fuel and the aforementioned oxidant is burned and which constitutes an exhaust flow path for burned gas that is produced by combustion. The first invention heats at least one or the other of the aforementioned fuel within the aforementioned fuel flow path and the aforementioned oxidant within the aforementioned oxidant flow path by the heat of the aforementioned burned gas, and constitutes the aforementioned air-fuel mixture by mixing the aforementioned fuel emitted from the aforementioned fuel flow path and the oxidant emitted from the aforementioned oxidant flow path in the aforementioned exhaust gas flow path.

With respect to the aforementioned first invention, a second invention includes: a first pipe of which one end is a blocked end; a second pipe which surrounds the first pipe, and of which one end on the blocked end side of the aforementioned first pipe is a blocked end; and a third pipe which surrounds the second pipe, and of which one end on the blocked end side of the aforementioned first pipe is a blocked end. In the second invention, the interior of the aforementioned first pipe constitutes one part of the aforementioned fuel flow path and the aforementioned oxidant flow path, a space between the aforementioned first pipe and the aforementioned second pipe constitutes the other part of the aforementioned fuel flow path and the aforementioned oxidant flow path, and a space between the aforementioned second pipe and the aforementioned third pipe constitutes the aforementioned exhaust gas flow path.

With respect to the aforementioned second invention, as regards a third invention, the aforementioned first pipe is provided with emission ports, and the aforementioned second pipe is provided with emission ports that are formed so as to be superimposed relative to the aforementioned emission ports of the aforementioned first pipe in a bore direction.

With respect to the aforementioned third invention, as regards a fourth invention, an aperture area of the aforementioned emission ports of the aforementioned second pipe is wider than an aperture area of the aforementioned emission ports of the aforementioned first pipe.

With respect to the aforementioned third invention, as regards a fifth invention, the aforementioned blocked end of the aforementioned first pipe is joined to the aforementioned blocked end of the aforementioned second pipe, and an absorption means is provided for absorbing thermal elongation of the aforementioned first pipe so that there is no slippage in the positional relations of the aforementioned emission ports of the aforementioned first pipe and the aforementioned emission ports of the aforementioned second pipe.

With respect to the aforementioned second invention, as regards a sixth invention, the aforementioned first pipe projects from the aforementioned second pipe so that the aforementioned blocked end of the aforementioned first pipe is positioned more toward the aforementioned blocked end side of the aforementioned third pipe than the aforementioned blocked end of the aforementioned second pipe, the aforementioned first pipe and the aforementioned second pipe are provided with emission ports, and the aforementioned emission ports of the aforementioned first pipe are formed more toward the aforementioned blocked end side of the aforementioned first pipe than the aforementioned blocked end of the aforementioned second pipe.

With respect to the aforementioned sixth invention, as regards a seventh invention, interstices are at least discretely formed in a boundary region of the circumferential surface of the aforementioned first pipe and the aforementioned blocked end of the aforementioned second pipe.

With respect to the aforementioned first to sixth inventions, as regards an eighth invention, the aforementioned second pipe is provided with a heat transfer region which is exposed to an environment that is below an oxidation corrosion temperature of formative material, and which has a relatively high thermal conductivity and a relatively low thermal resistance, as well as a heat resistant region which is exposed to an environment that is above the oxidation corrosion temperature of the aforementioned formative material of the heat transfer region, and which has a relatively high thermal resistance compared to the aforementioned heat transfer region.

With respect to the aforementioned eighth invention, as regards a ninth invention, the aforementioned heat resistant region has a relatively high thermal resistance due to a coating that is applied to the surface of the second pipe.

With respect to the aforementioned eighth invention, as regards a tenth invention, the aforementioned heat resistant region is formed from material of higher thermal resistance than the aforementioned formative material of the aforementioned heat transfer region.

With respect to any of the aforementioned eighth to tenth inventions, as regards a eleventh invention, a first member that is provided with the aforementioned heat transfer region and a second member that has the aforementioned heat resistant region are formed as separate bodies, and the aforementioned second pipe is configured by joining the aforementioned first member and the aforementioned second member.

### EFFECTS OF THE INVENTION

According to the present invention, a fuel flow path which is a flow path for fuel and which is capable of emitting fuel, and an oxidant flow path which is a flow path for oxidant and which is capable of emitting oxidant are provided as separate bodies. Consequently, fuel emitted from the fuel flow path and oxidant emitted from the oxidant flow path are mixed in an exhaust gas flow path that is provided in the combustion region. In addition, the fuel or oxidant is heated prior to mixing by the heat of burned gas.

According to the present invention, as an air-fuel mixture does not exist in either the fuel flow path or the oxidant flow path, auto-ignition of the air-fuel mixture does not occur in the fuel flow path or the oxidant flow path. Moreover, auto-ignition of the fuel or the oxidant does not ordinarily occur in the absence of mixing. Consequently, flame formation does not occur in either the fuel flow path or the oxidant flow path.

Accordingly, regardless of the amount of heat that is transferred from the burned gas to the fuel and the oxidant, it is possible to prevent occurrence of combustion outside of the exhaust gas flow path that is provided with a combustion region, and prevent auto-ignition of the air-fuel mixture. Consequently, there is no need to limit the distance of the thermal exchange path, limit the material of the thermal exchange path, limit combustion energy, nor the like.

Thus, according to the present invention, with respect to a combustor that enables size reduction and that heats an air-fuel mixture with the heat of burned gas, auto-ignition of the air-fuel mixture is prevented, and the degree of design freedom of the combustor is enhanced.

In addition, according to the present invention, combustion gas can be heated by transferring the heat of burned gas to the combustion gas in the heat transfer region of the second pipe. Moreover, in the heat resistant region of the second pipe, it is possible to prevent oxidation embrittlement of the second pipe due to the heat of burned gas.
Thus, according to the present invention, with respect to a combustor that carries out heating by transferring the heat of burned gas to combustion gas, it is possible to render combustion gas sufficiently heatable, and enhance durability.

### BRIEF DESCRIPTION OF THE DRAWINGS

FIG. 1 is an oblique view which schematically illustrates the skeleton framework of a combustor of a first embodiment of the present invention.
FIG. 2 is a sectional view which schematically illustrates the skeleton framework of the combustor of the first embodiment of the present invention.
FIG. 3 is a sectional view which schematically illustrates the skeleton framework of a combustor of a second embodiment of the present invention.
FIG. 4 is a sectional view which schematically illustrates the skeleton framework of a combustor of a third embodiment of the present invention.
FIG. 5 is a sectional view which illustrates a variation of the combustor of the third embodiment of the present invention.
FIG. 6 is a sectional view which schematically illustrates the skeleton framework of a combustor of a fourth embodiment of the present invention.
FIG. 7 is a sectional view which schematically illustrates the skeleton framework of a combustor of a fifth embodiment of the present invention.
FIG. 8 is an exploded sectional view of an inner pipe with which a combustor of a sixth embodiment of the present invention is provided.

### BEST MODE FOR CARRYING OUT THE INVENTION

Embodiments of the combustor of the present invention are described below with reference to drawings.
In the drawings which follow, the dimensions of the various components have been appropriately modified to a size that enables recognition of the respective component.

### (First embodiment)

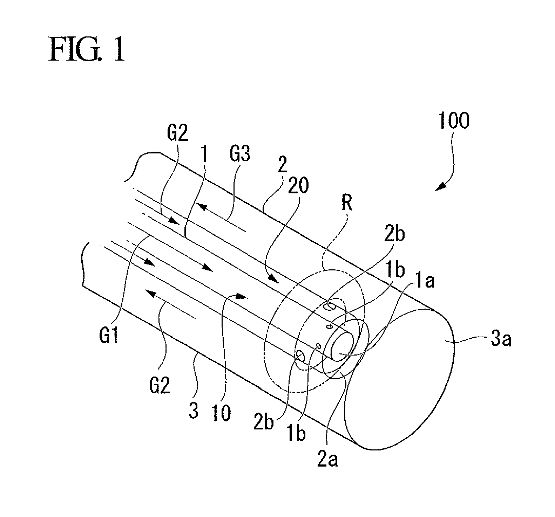

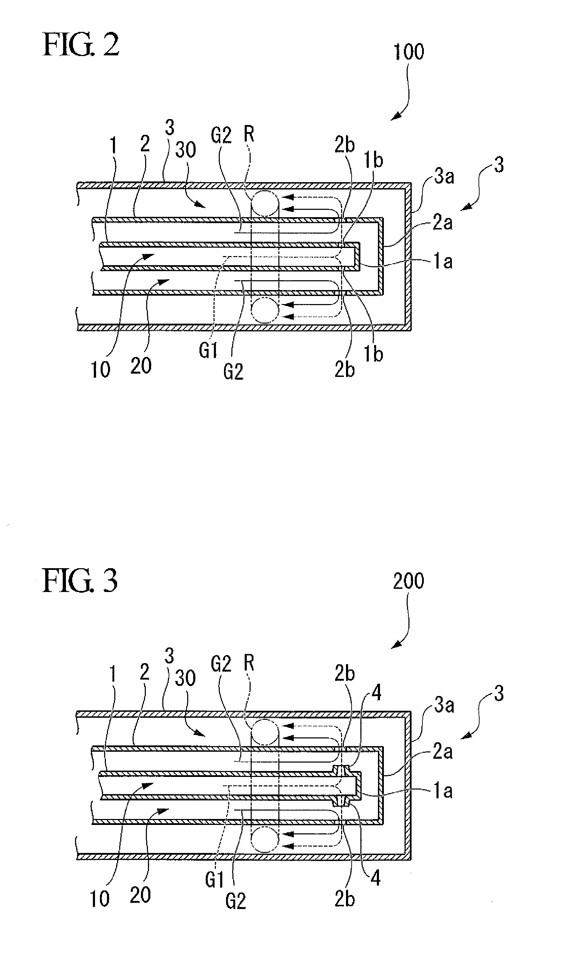

Fig. 1 and Fig. 2 are drawings which schematically illustrate the skeleton framework of a combustor 100 of the present embodiment. Fig. 1 is an oblique view, and Fig. 2 is a sectional view.
As these drawings show, the combustor 100 of the present embodiment has a so-called triple-pipe structure, provided with a first pipe 1, a second pipe 2 and a third pipe 3 which are concentrically arranged.

The first pipe 1 has a cylindrical shape wherein one end constitutes a blocked end 1a, and is formed from metal material that has thermal resistance.
Multiple through-holes are formed on the circumferential surface in the vicinity of the blocked end 1a of the first pipe 1. The through-holes constitute emission ports 1b which emit fluid from the interior of the first pipe 1 to the exterior of the first pipe 1.

The second pipe 2 has a cylindrical shape such that it surrounds the first pipe 1, and such that one end on the blocked end 1a side of the first pipe 1 constitutes a blocked end 2a. As with the first pipe 1, the second pipe 2 is formed from metal material that has thermal resistance. The blocked end 1a of the first pipe 1 and the blocked end 2a of the second pipe 2 are disposed with mutual separation.
Multiple through-holes are formed on the circumferential surface in the vicinity of the blocked end 2a of the second pipe 2. The through-holes constitute emission ports 2b which emit fluid from the interior of the second pipe 2 to the exterior of the second pipe 2.
Moreover, the emission ports 2b of the second pipe 2 are formed so as to be superimposed in a bore direction relative to the emission ports 1b of the first pipe 1, and are provided in the same number as the emission ports 1b of the first pipe 1. Furthermore, in the present embodiment, the aperture area of the emission ports 2b of the second pipe 2 is set wider than the aperture area of the emission ports 1b of the first pipe 1.

The third pipe 3 has a cylindrical shape such that it surrounds the second pipe 2, and such that one end on the blocked end 2a side of the second pipe 2 constitutes a blocked end 3 a. As with the first pipe 1 and the second pipe 2, the third pipe 3 is formed from metal material that has thermal resistance. The blocked end 2a of the second pipe 2 and the blocked end 3a of the third pipe 3 are disposed with mutual separation.

In the combustor 100 of the present embodiment, the interior of the first pipe 1 constitutes a fuel flow path 10 which is a flow path for fuel G1 and which is capable of emitting the fuel G1 to its own exterior.
This fuel flow path 10 directs the fuel G1 which is supplied to the interior of the first pipe 1 from the side that is opposite the blocked end 1a toward the blocked end 1a side, and emits the fuel to its own exterior via the emission ports 1b.
As the fuel G1, one may use, for example, methane gas, propane gas, and the like.

In the combustor 100 of the present embodiment, the space between the first pipe 1 and the second pipe 2 constitutes an air flow path 20 (oxidant flow path) which is a flow path for air G2 (oxidant) and which enables emission of the air G2 to its own exterior.
This air flow path 20 directs the air G2 which is supplied between the first pipe 1 and the second pipe 2 from the side that is opposite the blocked end 2a toward the blocked end 2a side, and emits the air G2 to its own exterior via the emission ports 2b.

In the combustor 100 of the present embodiment, the space between the second pipe 2 and the third pipe 3 constitutes an exhaust gas flow path 30 which has a combustion region R wherein an air-fuel mixture that mixes the fuel G1 and the air G2 is burned, and which is an exhaust flow path for the burned gas G3 that is generated by combustion.
This exhaust gas flow path 30 directs the exhaust gas G3 that is generated by combustion of the air-fuel mixture in the combustion region R toward the side that is opposite the blocked end 3a, and discharges it to its own exterior.

Next, the operations of the combustor 100 of the present embodiment with the foregoing configuration are described.
In the description which follows, description is given of a state in which the air-fuel mixture has already been ignited by an ignition apparatus that is not illustrated in the drawings, and in which the air-fuel mixture is being burned in the combustion region R within the exhaust gas flow path 30.

When the air-fuel mixture is burned in the combustion region R, the high-temperature burned gas G3 that is generated by burning of the air-fuel mixture is directed through the exhaust gas flow path 30 toward the side that is opposite the blocked end 3a.
At this time, the heat of the burned gas G3 is transferred to the air G2 that flows through the air flow path 20 via the second pipe 2, resulting in heating of the air G2. Furthermore, the heat of the burned gas G3 is transferred to the fuel G1 that flows through the fuel flow path 10 via the first pipe 1, resulting in heating of the fuel G1. In particular, a large amount of heat is transferred to the air G2 that flows in being separated from the burned gas G3 by only the second pipe 2, heating the air G2.

The fuel G1 is heated in the above-described manner while flowing through the fuel flow path 10 toward the blocked end 1a, and is emitted to the exterior of the fuel flow path 10 from the emission ports 1b formed in the first pipe 1. Here, the emission ports 1b formed in the first pipe 1 and the through-holes 2b formed in the second pipe 2 are superimposed in the penetration direction. Consequently, the fuel G1 is emitted from the emission ports 1b formed in the first pipe 1, after which it is further supplied to the exhaust gas flow path 30 via the emission ports 2b formed in the second pipe 2.

On the other hand, the air G2 is heated in the above-described manner while flowing through the air flow path 20 toward the blocked end 2a, and is emitted to the exterior of the air flow path 20 - that is, to the exhaust gas flow path 30 - from the emission ports 2b formed in the second pipe 2.

Here, the fuel G1 and the air G2 are emitted via the emission ports 1b and 2b which are extremely small openings compared to the flow path areas of the flow paths (fuel flow path 10 and air flow path 20) through which the fuel G1 and the air G2 respectively flow. Consequently, when the fuel G1 an the air G2 are emitted from the emission ports 1b and 2b, they are emitted at a high flow rate and in a state of turbulence.
Accordingly, the fuel G1 emitted from the emission ports 1b and the air G2 emitted from the emission ports 2b are rapidly mixed into a high-temperature air-fuel mixture in the process of being supplied to the exhaust gas flow path 30, and are supplied to the combustion region R of the exhaust gas flow path 30.
The fuel G1 and the air G2 supplied to the combustion region R are then burned by contact with the flame that exists beforehand in the combustion region R.

In short, the combustor 100 of the present embodiment has the fuel flow path 10 which is a flow path for the fuel G1 and which enables emission of the fuel G1 to its own exterior, the air flow path 20 which is a flow path for the air G2 and which enables emission of the air G2 to its own exterior, and the combustion region R wherein an air-fuel mixture that mixes the fuel G1 and the air G2 is burned. Furthermore, the combustor 100 of the present embodiment is provided with an exhaust gas flow path 30 which is an exhaust flow path for the burned gas G3 generated by the aforementioned combustion.
The combustor 100 of the present embodiment heats the fuel G1 within the fuel flow path 10 and the air G2 within the air flow path 20 by the heat of the burned gas G3. Furthermore, the combustor 100 of the present embodiment creates an air-fuel mixture in the exhaust gas flow path 30 by mixing the fuel G1 emitted from the fuel flow path 10 and the air G2 emitted from the air flow path 20.

According to the combustor 100 of the foregoing configuration, the fuel flow path 10 which is a flow path for the fuel G1 and which enables emission of the fuel G1, and the air flow path 20 which is a flow path for the air G2 and which enables emission of the air G2 are separately provided. In the combustor 100 of the present embodiment with the foregoing configuration, the fuel G1 emitted from the fuel flow path 10 and the air G2 emitted from the air flow path 20 are mixed in the exhaust gas flow path 30 that is provided with the combustion region G. Moreover, the fuel G1 and the air G2 are heated prior to mixing by the heat of the burned gas G3.

According to the combustor 100 of the present embodiment, as an air-fuel mixture does not exist in the fuel flow path 10 and the air flow path 20, the phenomenon of auto-ignition does not occur with respect to an air-fuel mixture in the fuel flow path 10 and the air flow path 20. Moreover, auto-ignition does not ordinarily occur with respect to either the fuel G1 or the air G2 unless they are mixed. Consequently, a flame is not formed in the fuel flow path 10 and the air flow path 20.

Accordingly, regardless of the amount of heat received by the fuel G1 and the air G2 from the burned gas G3, it is possible to prevent the occurrence of combustion outside the exhaust gas flow path 30 that is provided with the combustion region R and prevent auto-ignition of the air-fuel mixture. Consequently, the distance of the thermal exchange path is not limited. The material of the thermal exchange path is also not limited. Furthermore, limitations or the like on combustion energy do not arise. For example, a large amount of combustion energy is produced by supplying a large amount of air-fuel mixture to the combustion region R, enhancing output of the combustor 100.

Thus, according to the combustor 100 of the present embodiment, it is possible to prevent auto-ignition of an air-fuel mixture in a combustor that heats an air-fuel mixture by the heat of burned gas and that enables size reduction. Furthermore, according to the combustor 100 of the present embodiment, the degree of design freedom of the combustor is enhanced.

Moreover, in the combustor 100 of the present embodiment, the aperture area of the emission ports 2b of the second pipe 2 are set wider than the aperture area of the emission ports 1b of the first pipe 1.
Consequently, even in the case where the positional relation of the first pipe 1 and the second pipe 2 changes due to thermal expansion and contraction, it is possible to constantly maintain superimposition of the emission ports 1b of the first pipe 1 and the emission ports 2b of the second pipe 2 in the penetration direction.
The first pipe 1 and the second pipe 2 undergo thermal expansion and contraction mainly in the direction of extension. Consequently, for example, it is possible to prevent an unnecessary increase in the aperture area of the emission ports 2b of the second pipe 2 by forming the emission ports 2b of the second pipe 2 as long holes that are long in the direction of extension.

### (Second embodiment)

Next, a second embodiment of the present invention is described. In the description of this second embodiment, description of components identical to those of the first embodiment is omitted or abbreviated.

Fig. 3 is a sectional view which schematically illustrates the skeleton framework of a combustor 200 of the present embodiment. As shown in this drawing, the combustor 200 of the present embodiment installs ejector nozzles 4 in the emission ports 1b of the first pipe 1.

According to the combustor 200 of the present embodiment with the foregoing configuration, of the fuel G1 and the air G2, the fluid that has the higher flow volume is the working fluid, and is supplied to the exhaust gas flow path 30 while drawing in the other fluid.
Consequently, mixing of the fuel G1 and the air G2 is further accelerated, and it is possible to achieve more stable combustion of the air-fuel mixture in the combustion region R.

### (Third embodiment)

Next, a third embodiment of the present invention is described. In the description of this third embodiment, description of components identical to those of the first embodiment is omitted or abbreviated.

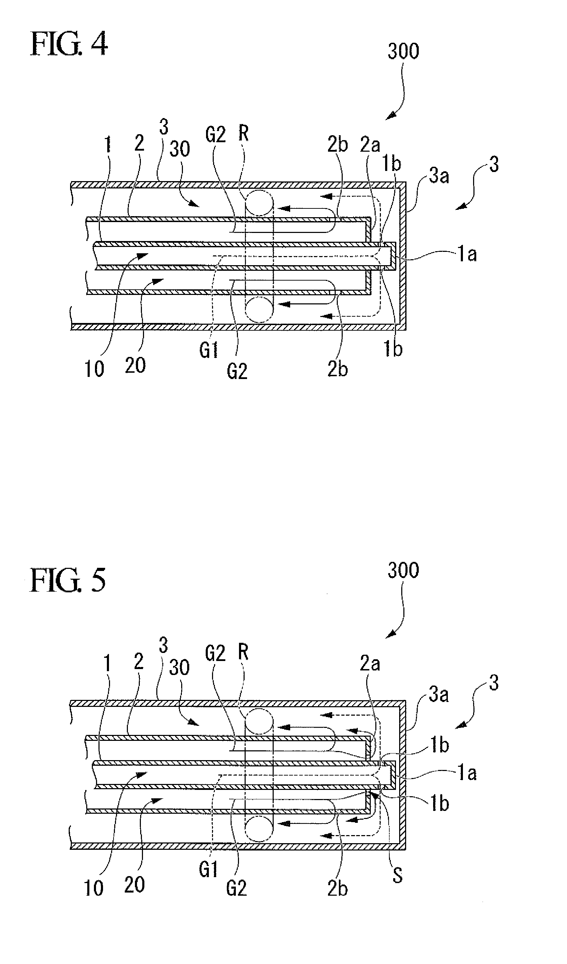

Fig. 4 is a sectional view which schematically illustrates the skeleton framework of a combustor 300 of the present embodiment. As shown in this drawing, with respect to the combustor 300 of the present embodiment, the first pipe 1 projects from the second pipe 2 so that the blocked end 1a of the first pipe 1 is positioned farther toward a side of the blocked end 3a of the third pipe 3 than the blocked end 2a of the second pipe 2.
Furthermore, the emission ports 1b of the first pipe 1 are formed farther toward a side of the blocked end 1a of the first pipe 1 than the blocked end 2a of the second pipe 2.

According to the combustor 300 of the present embodiment with the foregoing configuration, it is possible to supply the fuel G1 emitted from the fuel flow path 10 and the air G2 emitted from the air flow path 20 to the exhaust gas flow path 30 by completely separate routes.
Consequently, it is possible to more reliably prevent the existence of air-fuel mixture in regions outside the exhaust gas flow path 30, and more reliably prevent the occurrence of combustion outside the exhaust gas flow path 30.

As well, as shown in Fig. 5, it is also acceptable to supply the air G2 to the space between the blocked end 2a of the second pipe 2 and the blocked end 3a of the third pipe 3 via interstices S, by forming interstices S at least discretely in the boundary region of the circumferential surface of the first pipe 1 and the blocked end 2a of the second pipe 2.
According to the foregoing configuration, an air-fuel mixture is produced in the space between the blocked end 2a of the second pipe 2 and the blocked end 3a of the third pipe 3. Consequently, for example it is possible to ignite an air-fuel mixture in the space between the blocked end 2a of the second pipe 2 and the blocked end 3a of the third pipe 3.

### (Fourth embodiment)

Next, a fourth embodiment of the present invention is described. In the description of this fourth embodiment, description of components identical to those of the aforementioned first embodiment is omitted or abbreviated.

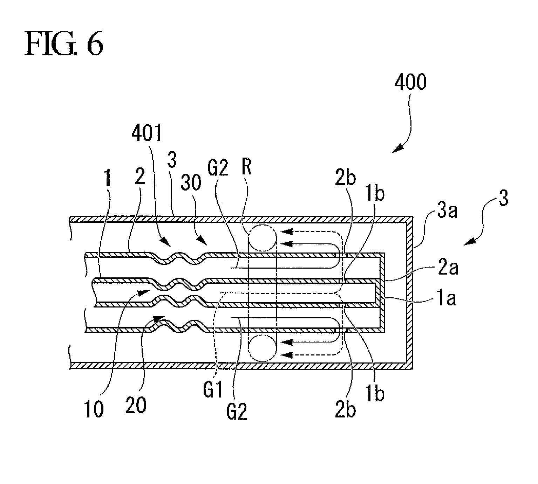

Fig. 6 is a sectional view which schematically illustrates the skeleton framework of a combustor 400 of the present embodiment. As shown in this drawing, with respect to the combustor 400 of the present embodiment, the blocked end 1a of the first pipe 1 is joined to the blocked end 2a of the second pipe 2. Furthermore, absorbers 401 (absorption means) which absorb the thermal expansion and contraction of the first pipe 1 are provided at an intermediate position of the first pipe 1 and an intermediate position of the second pipe 2 so that there is no slippage in the positional relations of the emission ports 1b of the first pipe 1 and the emission ports 2b of the second pipe 2. The absorbers 401 are configured, for example, from flexible heat-resistant members.

With respect to the present embodiment of the foregoing configuration, even in the case where there is thermal expansion and contraction of the first pipe 1 and the second pipe 2, the blocked end 1a of the first pipe 1 is joined to the blocked end 2a of the second pipe 2. Furthermore, as the absorbers 401 absorb thermal expansion and contraction of the first pipe 1 and the second pipe 2, it is possible to constantly maintain superimposition of the emission ports 1b of the first pipe 1 and the emission ports 2b of the second pipe 2 in the penetration direction.

### (Fifth embodiment)

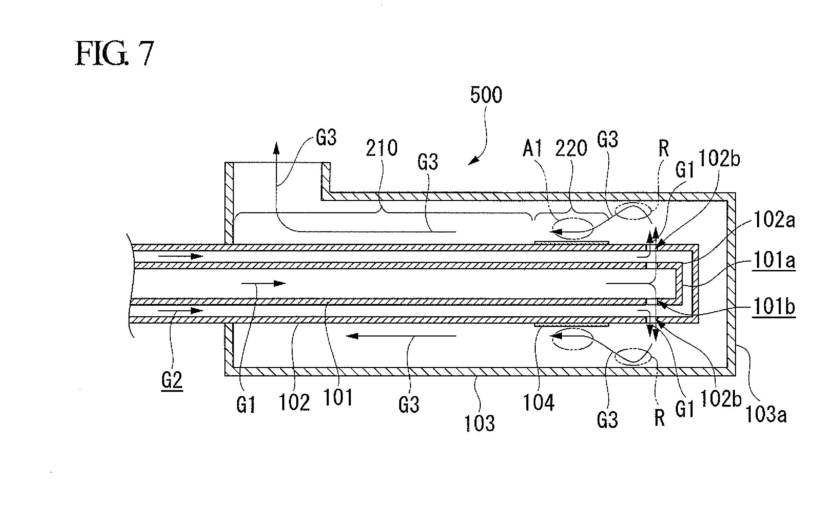

Next, a fifth embodiment of the present invention is described. Fig. 7 is a sectional view which schematically illustrates the skeleton framework of a combustor 500 of the present embodiment.
In the present embodiment, as the structure and positional relations of a first pipe 101, second pipe 102, third pipe 103, blocked ends 101 a, 102a, and 103a, and emission ports 101b and 102b are respectively identical to the first pipe 1, second pipe 2, third pipe 3, blocked ends 1a, 2a, and 3a, and emission ports 1b and 2b of the aforementioned first embodiment, description thereof is omitted.

With respect to a combustor 500 of the present embodiment, as the emission ports 102b of the second pipe 102 are formed on the circumferential surface of the second pipe 102, an air-fuel mixture of the fuel G1 and the air G2 emitted from the emission ports 102b impacts the inner wall surface of the third pipe 103, and its flow rate decreases. As a result, a combustion region R is stably formed in the region where flow rate decreases, that is, in the vicinity of the inner wall surface of the third pipe 103.
Moreover, the burned gas G3 produced by the burning of the air-fuel mixture in the combustion region R flows toward one end of the third pipe 103, and heads toward the outer wall surface of the second pipe 102 due to the repulsive force from impact of the air-fuel mixture against the third pipe 103, as shown by the arrow marks in Fig. 7.
As a result of this type of flow of the air-fuel mixture and the burned gas G3, within the second pipe 102, the region A1 on the downstream side of the combustion region R in the vicinity of the combustion region R constitutes a region which is exposed to a relatively high-temperature environment, as shown in Fig. 7. The second pipe 102 is exposed to a relatively low-temperature environment as it heads farther downstream in the discharge direction of the burned gas G3 from the region A1. As well, as the region on the upstream side from the region A1 of the second pipe in the discharge direction of the burned gas G3 is cooled by the air-fuel mixture emitted from the emission ports 102b of the second pipe, the region is exposed to a lower temperature environment than the region A1.

In the combustor 500 of the present embodiment, the temperature distribution to which the second pipe 102 is exposed is obtained in advance by actual measurements or by simulation. The second pipe 102 is divided into a heat transfer region 210 which has relatively high thermal conductivity and which has relatively low thermal resistance, and a heat resistant region 220 which has relatively high thermal resistance compared to the heat transfer region 210.
Specifically, in the present embodiment, the heat transfer region 210 constitutes a region which is exposed to a temperature environment that is below the oxidation corrosion temperature of the formative material of the heat transfer region 210, while the heat resistant region 220 constitutes a region which is exposed to a temperature environment that is above the oxidation corrosion temperature of the formative material of the aforementioned heat transfer region 210.

That is, in the combustor 500 of the present embodiment, the second pipe 102 is exposed to an environment that is below the oxidation corrosion temperature of formative material. The second pipe 102 is provided with a heat transfer region 210 which has relatively high thermal conductivity and relatively low thermal resistance, and a heat resistant region 220 which is exposed to an environment that is above the oxidation corrosion temperature of the formative material of the heat transfer region 210, and which has relatively high thermal resistance compared to the heat transfer region 210. This heat resistant region 220 necessarily includes the aforementioned region A1 of the second pipe 102 that is exposed to a relatively high-temperature environment.

In the combustor 500 of the present embodiment, the region on the upstream side from the region A1 of the second pipe 102 in the discharge direction of the burned gas G3 is formed from the same material as the heat transfer region 210. In short, in the combustor 500 of the present embodiment, only the region that is exposed to an environment that is above the oxidation corrosion temperature of the formative material of the heat transfer region 210 of the second pipe 102 is the heat resistant region 220.

In the combustor 500 of the present embodiment, as shown in Fig. 7, the heat resistant region 220 has a relatively high thermal resistance due to a coating 104 that is applied to the surface of the second pipe 102.
As the formative material of the second pipe 102, one may use carbon steel and stainless steel (e.g., SUS 321 or SUS 304). As the formative material of the coating 104, one may use ceramics.
For example, in the case where stainless steel is used as the formative material of the second pipe 102 and where ceramics is used as the formative material of the coating 104, the heat transfer region 210 is formed only from stainless steel, while the heat resistant region 220 has a double-layer structure of stainless steel and a ceramic layer.

In the combustor 500 of the present embodiment having the foregoing configuration, when air G2 is supplied to the second pipe, the air G2 is heated by the transfer of heat of the burned gas G3 via the second pipe that flows along the outer side of the second pipe 102 in the process of flowing through the second pipe 102. An air-fuel mixture containing the fuel G1 and the heated air is emitted from the emission ports 102b of the second pipe 102 into the space between the second pipe 102 and the third pipe 103, and is burned in the combustion region R.
Burned gas G3 is generated by the burning of the air-fuel mixture in the combustion region R. Then the burned gas G3 transits the interior of the third pipe 103, and is discharged to the outside. Here, in the combustor 500 of the present embodiment, the second pipe 102 is exposed to an environment which is below the oxidation corrosion temperature of the formative material. The second pipe 102 is provided with a heat transfer region 210 which has relatively high thermal conductivity and relatively low thermal resistance, and a heat resistant region 220 which is exposed to an environment that is above the oxidation corrosion temperature of the formative material of the heat transfer region 210, and which has relatively high thermal resistance compared to the heat transfer region 210. Consequently, oxidation embrittlement of the second pipe 102 in the heat resistant region 220 is prevented. Furthermore, it is possible to transfer the heat of the burned gas G3 to the air G2 in the heat transfer region 210. Furthermore, it is possible to transfer the heat of the heated air G2 to the fuel G1 via the first pipe.

In this manner, according to the combustor 500 of the present invention, the air G2 can be heated by transferring the heat of the burned gas G3 to the air G2 in the heat transfer region 210 of the second pipe 102. Furthermore, the heat of the heated air G2 can be transferred to the fuel G1 via the first pipe. Moreover, in the heat resistant region 220 of the second pipe 102, it is possible to prevent oxidation embrittlement of the second pipe 102 by the heat of the burned gas.
Thus, according to the combustor 500 of the present embodiment, with respect to a combustor that performs heating by transferring the heat of burned gas to combustion gas, it is possible to sufficiently heat the combustion gas. Furthermore, it is possible to enhance durability.

In addition, according to the combustor 500 of the present embodiment, the heat resistant region 220 is constituted only by a region which is exposed to an environment that is above the oxidation corrosion temperature of the formative material of the heat transfer region 210 of the second pipe 102, and a coating 104 is applied only to the heat resistant region 220.
In short, the area where the coating 104 is applied is kept to minimum. Consequently, it is possible to inhibit peeling of the coating 104 that originates in the thermal expansion and contraction differential of the formative material (ceramic material) of the coating 104 and the formative material (metal material) of the heat transfer region 210 of the second pipe 102.

### (Sixth embodiment)

Next, a sixth embodiment of the present invention is described. In description of the sixth embodiment, description of portions identical to the aforementioned fifth embodiment is either omitted or abbreviated.

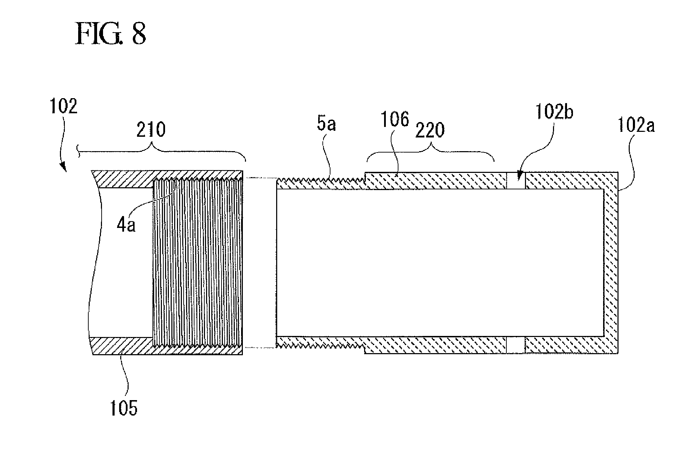

Fig. 8 is an exploded sectional view of a second pipe 102 with which the combustor of the present embodiment is provided. As shown in this drawing, with respect to the second pipe 102 with which the combustor of the present embodiment is provided, a first member 105 provided with the heat transfer region 210 and a second member 106 provided with the heat resistant region 220 are joined by fitting together a screw structure.

In the combustor of the present embodiment, a female screw 4a is formed in the first member 105, and a male screw 5a is formed in the second member 106.
However, it is also acceptable to form the male screw in the first member 105, and form the female screw in the second member 106.

In the combustor of the present embodiment, the first member 105 is formed from material that has relatively high thermal conductivity and relatively low thermal resistance. As a result of this configuration, the heat transfer region 210 has a high thermal conductivity.
On the other hand, the second member 106 is formed from material with a higher thermal resistance than the formative material of the aforementioned heat transfer region 210. As a result of this configuration, the heat resistant region 220 has a high thermal resistance.
As the formative material of the first member 105, one may use carbon steel or stainless steel (e.g., SUS321, SUS304, SUS316 and SUS310). As the formative material of the second member 106, one may use ceramics.

As in the aforementioned fifth embodiment, so also in the combustor of the preceding embodiment, the air G2 can be heated by transferring the heat of the burned gas G3 to the air G2 in the heat transfer region 210 of the second pipe 102. Furthermore, the heat of the heated air G2 can be transferred to the fuel G1 via the first pipe. Moreover, in the heat resistant region 220 of the second pipe 102, it is possible to prevent oxidation embrittlement of the second pipe 102 by the heat of the burned gas.
Thus, according to the combustor of the present embodiment, with respect to a combustor that performs heating by transferring the heat of burned gas to combustion gas, it is possible to sufficiently heat the combustion gas. Furthermore, it is possible to enhance durability.

While preferred embodiments of the invention have been described with reference to drawings, it should be understood that these are exemplary of the invention, and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

For example, in the foregoing embodiments, a configuration is described which has a fuel flow path 10 within the first pipe 1 and an air flow path 20 in the space between the first pipe 1 and the second pipe 2.
However, the present invention is not limited thereto, and it is also possible to have an air flow path within the first pipe 1 and a fuel flow path in the space between the first pipe 1 and the second pipe 2.

Moreover, in the foregoing embodiments, a configuration was described wherein air G2 is used as the oxidant of the present invention.
However, the present invention is not limited thereto, and one may also use, for example, pure oxygen gas as the oxidant. In addition, one may also use oxygen-containing gas with an oxygen partial pressure that differs from that of air.

Moreover, for example, in the case where it is undesirable to heat either the fuel or the oxidant until immediately prior to combustion, it is also acceptable to have the flow path of the fuel or the oxidant within the first pipe 1, and further impart heat insulating properties to the first pipe 1.

In the foregoing embodiments, configurations were described wherein the formative materials of the coating 104 and the second member 106 are ceramics.
However, the present invention is not limited thereto, and it is also acceptable to form the coating 104 and the second member 106 from other heat resistant material which has higher thermal resistance than the formative material of the heat resistant region 220.

### INDUSTRIAL APPLICABILITY

According to the present invention, in a combustor that enables size reduction and that heats an air-fuel mixture by the heat of burned gas, it is possible to prevent auto-ignition of the air-fuel mixture, and enhance the degree of design freedom of the combustor.

### DESCRIPTION OF THE REFERENCE NUMERALS

100, 200, 300, 400, 500: combustor
1, 101: first pipe
1a, 2a, 3a, 101a, 102a, 103a: blocked end
1b, 2b, 101b, 102b: emission ports
2, 102: second pipe
3, 103: third pipe
4: ejector nozzle
10: fuel flow path
20: air flow path (oxidant flow path)
30: exhaust gas flow path
G1: fuel
G2: air (oxidant)
G3: burned gas
R: combustion region
401: absorber (absorption means)
104: coating
105: first member
106: second member
210: heat transfer region
220: heat resistant region

## Claims

1. A combustor, comprising: a fuel flow path which is a flow path for fuel and which is capable of emitting the fuel to its exterior; an oxidant flow path which is a flow path for oxidant and which is capable of emitting the oxidant to its exterior; and an exhaust gas flow path which has a combustion region wherein an air-fuel mixture that mixes the fuel and the oxidant is burned and which constitutes an exhaust flow path for burned gas that is produced by combustion;
wherein at least one or the other of the fuel within the fuel flow path and the oxidant within the oxidant flow path is heated by the heat of the burned gas, and the air-fuel mixture is constituted by mixing the fuel emitted from the fuel flow path and the oxidant emitted from the oxidant flow path in the exhaust gas flow path.

2. The combustor according to claim 1, comprising: a first pipe of which one end is a blocked end; a second pipe which surrounds the first pipe, and of which one end on the blocked end side of the first pipe is a blocked end; and a third pipe which surrounds the second pipe, and of which one end on the blocked end side of the first pipe is a blocked end;
wherein the interior of the first pipe constitutes one part of the fuel flow path and the oxidant flow path;
a space between the first pipe and the second pipe constitutes the other part of the fuel flow path and the oxidant flow path;
and a space between the second pipe and the third pipe constitutes the exhaust gas flow path.

3. The combustor according to claim 2, wherein the first pipe is provided with emission ports, and the second pipe is provided with emission ports that are formed so as to be superimposed relative to the emission ports of the first pipe in a penetration direction.

4. The combustor according to claim 3, wherein an aperture area of the emission ports of the second pipe is wider than an aperture area of the emission ports of the first pipe.

5. The combustor according to claim 3, wherein the blocked end of the first pipe is joined to the blocked end of the second pipe, and an absorption means is provided for absorbing thermal expansion and contraction of the first pipe so that there is no slippage in the positional relations of the emission ports of the first pipe and the emission ports of the second pipe.

6. The combustor according to anyone of the claims 3 to 5, wherein ejector nozzles are installed in the emission ports of the first pipe.

7. The combustor according to claim 2, wherein the first pipe projects from the second pipe so that the blocked end of the first pipe is positioned more toward the blocked end side of the third pipe than the blocked end of the second pipe;
and wherein the first pipe and the second pipe are provided with emission ports, and the emission ports of the first pipe are formed more toward the blocked end side of the first pipe than the blocked end of the second pipe.

8. The combustor according to claim 7, wherein interstices are at least discretely formed in a boundary region of the circumferential surface of the first pipe and the blocked end of the second pipe.

9. The combustor according to anyone of the claims 1 to 7, wherein the first pipe has a heat transfer region and a heat resistant region,
the heat transfer region is exposed to an environment that is below an oxidation corrosion temperature of formative material, and has a higher thermal conductivity and a lower thermal resistance than the heat resistant region,
and the heat resistant region is exposed to an environment that is above the oxidation corrosion temperature of the formative material of the heat transfer region, and has a higher thermal resistance than the heat transfer region.

10. The combustor according to claim 9, wherein the heat resistant region has a higher thermal resistance than the heat transfer region due to a coating that is applied to the surface of the first pipe.

11. The combustor according to claim 9, wherein the heat resistant region is formed from material of higher thermal resistance than the formative material of the heat transfer region.

12. The combustor according to claim 9, wherein a first member that has the heat transfer region and a second member that has the heat resistant region are formed as separate bodies,
and the first pipe is configured by joining the first member and the second member.
